# EUROPÄISCHE PATENTANMELDUNG

(11) **EP 3 101 238 A1**
(43) Veröffentlichungstag der Anmeldung: **07.12.2016**
(21) Anmeldenummer: 15170753.6
(22) Anmeldetag: 05.06.2015
(51) Int. Cl.: F01D 25/00, F02C 7/228, F02C 7/22

(54) **BRENNSTOFFLEITUNGSSYSTEM MIT FLUSSTEILER UND BYPASS-LEITUNG**

(71) Anmelder: Siemens Aktiengesellschaft, 80333 München (DE)
(72) Erfinder: Claßen, Sebastian, 45128 Essen (DE); Waruschewski, Andreas, 46242 Bottrop (DE)

(57) **Zusammenfassung**

Die Erfindung betrifft ein Brennstoffleitungssystem (1) einer Gasturbine (100) umfassend einen motorisch betreibbaren Flussteiler (10), in welchen fluidtechnisch eine zuführende Heizölleitung (15) mündet, und welcher fluidtechnisch an eine Anzahl an abführenden Heizölleitungen (16) angeschlossen ist, wobei eine Bypass-Leitung (20) vorgesehen ist, welche die zuführende Heizölleitung (15) und wenigstens eine abführende Heizölleitung (16) fluidtechnisch verbindet, wobei in die Bypass-Leitung (20) ein Bypass-Ventil (21) zum Absperren und Öffnen der Bypass-Leitung (20) geschaltet ist.

## Beschreibung

Die vorliegende Erfindung betrifft ein Brennstoffleitungssystem einer Gasturbine umfassend einen motorisch betreibbaren Flussteiler, in welchen fluidtechnisch eine zuführende Heizölleitung mündet, und welcher fluidtechnisch an eine Anzahl an abführenden Heizölleitungen angeschlossen ist.

In einem Brennstoffleitungssystem einer Gasturbine, welches mit Heizöl beschickt wird, werden mitunter Flussteiler eingesetzt, welche einen durch ein zuführende Heizölleitung zugeführten Heizölstrom in eine Mehrzahl an Einzelheizölströme aufteilen, mit welche die abführenden Heizölleitungen beschickt werden. Derartige Flussteiler (in Engl.: flow divider) weisen mitunter einen sehr komplizierten mechanischen Aufbau auf, welcher sehr stark wartungsanfällig sein kann. Insbesondere weist ein Flussteiler typischerweise eine Anzahl an aktivierbaren Fluidfördereinheiten auf, welche etwa durch einen Motor, der extern oder auch intern mit dem Flussteiler verschaltet ist, angetrieben werden können. Derartige Fluidfördereinheiten können etwa sich drehende Fluidfördersysteme bzw. Verdrängersysteme sein.

Unter anderem auch aufgrund der zahlreichen mechanischen Komponenten in dem Flussteiler ist es erforderlich, diesen in regelmäßigen Abständen zu spülen, damit ein Zusetzen der beweglichen Bauteile vermieden werden kann. Insbesondere wenn das Heizöl längere Zeit in einer Komponente verbleibt oder an dieser anliegt, kann dieses durch einen Verschleiß- und Alterungsprozess zähflüssiger werden. Damit werden nicht nur die jeweiligen mechanischen Komponenten schwerer gängig, sollten diese beweglich ausgebildet sein, sondern es steigt auch das Anfahrdrehmoment beim Start der Gasturbine. Bei Brennstoffleitungssystemen, welche eine Gasturbine mit Heizöl versorgen, werden etwa alle vier Wochen einmal die Flussteiler gezielt gespült, um zu verhindern, dass das relativ stark viskose Heizöl die beweglichen Bauteile verklebt und diese damit zusetzt. Zudem wird die Viskosität des Heizöls durch die fluidische Bewegung auch lokal niedrig erhalten, so dass das Anfahrdrehmoment der Gasturbine weitgehend gering gehalten werden kann. Durch ein Verkleben würde bei Start der Gasturbine im ungünstigsten Fall die Gasturbine gar nicht anzudrehen sein, da das Anfahrdrehmoment zu groß wäre.

Bei Spülen des Flussteilers ist es erforderlich, den Teil des Brennstoffleitungssystems für das Heizöles kurze Zeit abzuschalten, wobei das zum Spülen verwendete Heizöl etwa über eine Drainageleitung in einen Leckagetank abgeführt werden kann. Während dieses Spülvorganges kann das durch die Brennstoffpumpe bewegte Heizöl diejenigen Bestandteile abführen, welche für die Zusetzung des Flussteilers verantwortlich sind. Nachteilig an diesem Verfahren ist jedoch, dass das Spülen die Verwendung einer substanziellen Menge an Heizöl erfordert, welches wenigstens zweiweise für den Betrieb der Gasturbine nicht mehr zur Verfügung stehen kann.. Insofern ist dafür Sorge zu tragen, dass das in den Leckagetank abgeleitete Heizöl wiederum dem Versorgungssystem für das Brennstoffleitungssystem zugeführt werden kann, um dieses nicht verlieren zu müssen.

Um diese aus dem Stand der Technik bekannten Nachteile zu vermeiden, ist es erforderlich, ein geeignetes Brennstoffleitungssystem mit Flussteiler vorzuschlagen, welches insbesondere verhindern kann, dass beim Spülen des Brennstoffleitungssystems eine Abführung des zum Spülen verwendeten Heizöls in einen Leckagetank über eine Drainageleitung erfolgen muss. Zudem soll es ermöglicht werden, einen Flussteiler in dem Brennstoffleitungssystem kontrolliert und effizient zu spülen, ohne Heizöl aus dem Brennstoffleitungssystem abführen zu müssen.

Diese der Erfindung zugrundeliegenden Aufgaben werden gelöst durch ein Brennstoffleitungssystem gemäß Anspruch 1 sowie durch ein Verfahren zum Betreiben eines solchen vorab wie auch nachfolgend beschriebenen Brennstoffleitungssystems gemäß Anspruch 5, wie auch durch eine Gasturbine gemäß Anspruch 7.

Insbesondere werden die der Erfindung zugrundeliegenden Aufgaben gelöst durch ein Brennstoffleitungssystem einer Gasturbine umfassend einen motorisch betreibbaren Flussteiler, in welchen fluidtechnisch eine zuführende Heizölleitung mündet, und welcher fluidtechnisch an eine Anzahl an abführenden Heizölleitungen angeschlossen ist, wobei eine Bypass-Leitung vorgesehen ist, welche die zuführende Heizölleitung um wenigstens eine abführende Heizölleitung fluidtechnisch verbindet, wobei in die Bypass-Leitung ein Bypass-Ventil zum Absperren und Öffnen der Bypass-Leitung geschaltet ist.

Weiterhin werden die der Erfindung zugrundeliegenden Aufgaben gelöst durch ein Verfahren zum Betrieb eines Brennstoffleitungssystems gemäß der Darstellung vorab wie auch nachfolgend, wobei die folgenden Schritte umfasst sind:
- Absperren der zuführenden Heizölleitung durch ein erstes Absperrorgan;
- Absperren wenigstens einer abführenden Heizölleitung durch ein zweites Absperrorgan;
- Öffnen des Bypass-Ventils in der Bypass-Leitung;
- Motorisches Betreiben des Flussteilers und zyklisches Bewegen von Heizöl in dem Flussteiler und der Bypass-Leitung.

Ebenfalls werden die der Erfindung zugrundeliegenden Aufgaben gelöst durch eine Gasturbine umfassend ein solches vorab wie auch nachfolgend beschriebenes Brennstoffleitungssystem.

An dieser Stelle ist darauf hinzuweisen, dass ein motorisch betreibbarer Flussteiler dazu ausgebildet ist, mit einem Motor betrieben zu werden, wobei ein solcher motorischer Betrieb nicht zwingend erfolgen muss. Insofern ist der Flussteiler mit einem Motor insoweit verschaltet, dass ein motorischer Betrieb erfolgen kann, wenn dies erforderlich ist. Jedoch sind auch Betriebsweisen denkbar, zu welchen der Betrieb nicht motorisch erfolgt. Bevorzugt wird der Flussteiler mit einem Motor betrieben, ist also ein motorisch betriebener Flussteiler.

Weiterhin ist die Anzahl an abführenden Heizölleitungen mindestens zwei, also eine Mehrzahl an Heizölleitungen.

Erfindungsgemäß ist vorgesehen, in das Brennstoffleitungssystem eine Bypass-Leitung zu verschalten, welche mittels einem geeigneten Bypass-Ventil nach Wunsch abgesperrt bzw. geöffnet werden kann. Das betreffende Bypass-Ventil kann hierbei zudem auch dazu ausgebildet sein, die Ströme nicht nur zu unterbrechen bzw. herzustellen, sondern auch hinsichtlich der Strömungsrate anzupassen.

Wird die zuführende Heizölleitung bzw. die Anzahl an abführenden Heizölleitungen entsprechend unterbrochen und das Bypass-Ventil in der Bypass-Leitung geöffnet, so kann durch motorisches Betreiben des Flussteilers das sich im Flussteiler befindliche Heizöl, sowie das sich in den betreffenden Leitungsabschnitten befindliche Heizöl entsprechend im Kreis gepumpt werden. Dieses zyklische Bewegen des Heizöls, welches bereits in den jeweiligen Leitungsabschnitten vorhanden ist, sorgt dafür, dass die Bestandteile des Heizöls, welche für ein Zusetzen des Flussteilers verantwortlich sind, entsprechend aufgeschwemmt werden. Anders als der weiter oben beschriebene interne Stand der Technik, der ein kontinuierliches Abführen des zum Spülen verwendeten Heizöls in einen Leckagetank vorsieht, sieht die vorliegende Erfindung ein zyklisches Bewegen und damit ein Wiederverwenden von Heizöl vor, um die Bestandteile im Flussteiler zu lösen, die andernfalls für eine Zusetzung verantwortlich wären.

An dieser Stelle ist darauf hinzuweisen, dass das erfindungsgemäße Verfahren typischerweise bei Stillstand des Heizölsystems erfolgt, also dann, wenn kein Heizöl der Gasturbine zur Verbrennung zugeführt wird. Das in den jeweiligen Leitungsabschnitten vorhandene Heizöl dient hierbei als Spülmedium.

Die Erfindung ermöglicht damit einerseits die Vermeidung des Betriebs der Brennstoffpumpe, welche zur Bewegung des Heizöls durch den Flussteiler zur Spülung desselben bereit gehalten werden müsste. Da der Motor, welcher erfindungsgemäß zum Betrieb des Flussteilers vorgesehen ist, typischerweise eine deutlich geringere Leistungsaufnahme aufweist als die Brennstoffpumpe zur Beförderung des Heizöls, ist zudem eine energetische Einsparung möglich. Das Spülen des Flussteilers kann zudem unabhängig von der Einsatzbereitschaft der Brennstoffpumpe des Heizölsystems erfolgen.

Gemäß einer ersten besonders bevorzugten Ausführungsform der Erfindung ist vorgesehen, dass die Bypass-Leitung mit allen abführenden Heizölleitungen fluidtechnisch verbunden ist. Die Bypass-Leitung ermöglicht damit die Zusammenführung von Heizöl aus allen Leitungsabschnitten beim Spülbetrieb und kann damit eine verhältnismäßig große Menge an Heizöl zum Spülen des Flussteilers aufwenden.

Weiterhin kann gemäß einer Ausführungsform der Erfindung vorgesehen sein, dass wenigstens einige, bevorzugt alle, abführenden Heizölleitungen mit einem Multifunktionsventil verschaltet sind und die Bypass-Leitung über das Multifunktionsventil mit der abführenden Heizölleitung fluidtechnisch verschaltet ist. Das Multifunktionsventil ist hierbei derart angeordnet, dass ein Absperren der jeweiligen abführenden Heizölleitungen, welche fluidtechnisch an das Multifunktionsventil angeschlossen sind, beim Spülbetrieb vorgenommen werden kann. Das Multifunktionsventil ermöglicht neben der Einstellung der Menge des Heizöls auch die gezielte Unterbrechung der Heizölzulaufleitungen zu den einzelnen Brennern der Gasturbine. Das Multifunktionsventil weist darüber hinaus normalerweise geeignete Anschlusspunkte auf, über welche eine Bypass-Leitung angeschlossen werden kann, ohne dass hierzu etwa in die einzelnen abführenden Heizölleitungen zusätzliche Anschlusspunkte geschaltet werden müssten. Insofern ist die Verschaltung der Bypass-Leitung mit einem Multifunktionsventil hinsichtlich des technischen Änderungsaufwandes besonders vorteilhaft.

Gemäß einer weiteren besonders bevorzugten Ausführungsform der Erfindung ist vorgesehen, dass die zuführende Heizölleitung ein erstes Absperrorgan aufweist, welches bei regulärem Betrieb des Brennstoffleitungssystems stromauf der fluidtechnischen Verbindung von zuführender Heizölleitung und Bypass-Leitung angeordnet ist, und wenigstens eine abführende Heizölleitung ein zweites Absperrorgan aufweist, welches bei regulärem Betrieb des Brennstoffleitungssystems stromabwärts der fluidtechnischen Verbindung von abführender Heizölleitung und Bypass-Leitung angeordnet ist. Das zweite Absperrorgan kann hierbei auch identisch mit einem Multifunktionsventil sein.

Der reguläre Betrieb betrifft einen Betrieb, bei welchem mit dem Brennstoffleitungssystems Heizöl zur Gasturbine für die Verbrennung befördert wird. Damit unterscheidet sich ein solcher regulärer Betrieb insbesondere von einem Spülbetrieb, bei welchem die Durchströmungsrichtungen der Leitungen durchaus geändert sein können. Ausführungsgemäß erlauben die Absperrorgane eine gezielte Unterbrechung des Brennstoffleitungssystems, und nach Öffnen des Bypass-Ventils in der Bypass-Leitung die Ausbildung eines Strömungskreislaufs über den Flussteiler.

Gemäß einer besonders bevorzugten Ausführungsform des erfindungsgemäßen Verfahrens ist vorgesehen, dass das motorische Betreiben des Flussteilers für eine vorbestimmte Zeit, insbesondere für wenigstens 10 Minuten ohne Unterbrechung durchgeführt wird. Bei längerem Stillstand wird typischerweise auch der motorische Betrieb in regelmäßigen zeitlichen Abständen voneinander aufgenommen und immer wieder durchgeführt. Die hierbei gewählten Spülzeiten können individuell eingestellt werden, betragen aber typischerweise wenigstens 10 Minuten. Ebenfalls ist es denkbar, dass der motorische Betrieb des Flussteilers automatisiert nach erfolgter Abschaltung des Heizölsystems nach einer vorbestimmten Ruhezeit in Betrieb genommen wird. Hierzu kann der Motor des Flussteilers etwa durch die Kraftwerksregelung angesteuert werden.

Nachfolgend soll die Erfindung anhand einzelner Figuren im Detail näher beschrieben werden. Hierbei ist darauf hinzuweisen, dass die technischen Merkmale mit gleichen Bezugszeichen vergleichbare technische Wirkungen aufweisen.

Weiterhin ist darauf hinzuweisen, dass die Zeichnungen lediglich schematisch zu verstehen sind, und dadurch keinerlei Einschränkung hinsichtlich der Ausführbarkeit der Erfindung resultiert.

Weiterhin ist darauf hinzuweisen, dass die nachfolgenden technischen Merkmale in beliebiger Kombination miteinander beansprucht werden, soweit diese die der Erfindung zugrundeliegende Aufgabe lösen kann.

Hierbei zeigen:
- Figur 1: eine schematische Schaltansicht einer ersten Ausführungsform des erfindungsgemäßen Brennstoffleitungssystems;
- Figur 2: eine weitere Ausführungsform in schematischer Schaltansicht des erfindungsgemäßen Brennstoffleitungssystems;
- Figur 3: eine weitere Ausführungsform in schematischer Schaltansicht des erfindungsgemäßen Brennstoffleitungssystems.

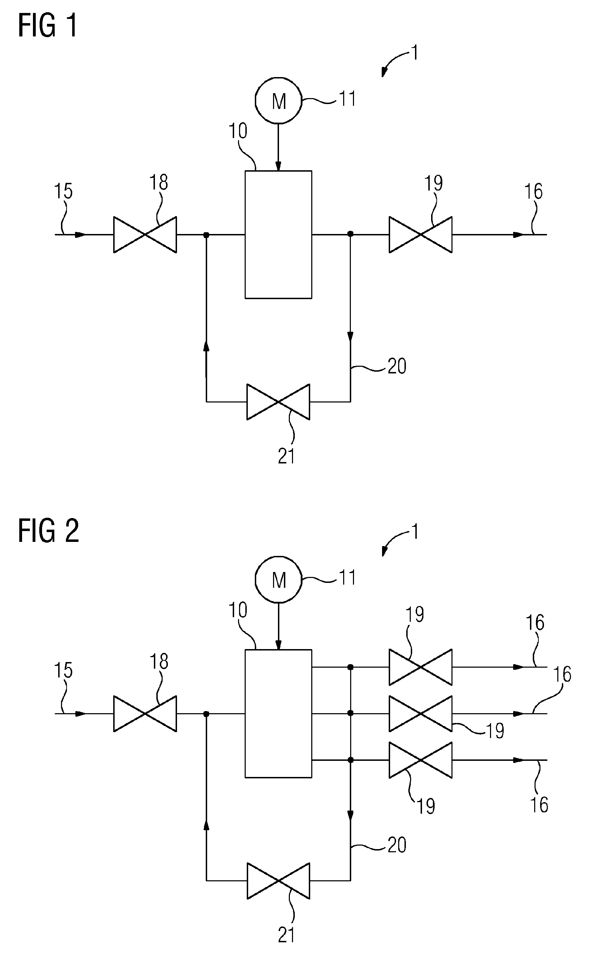

Figur 1 zeigt eine erste Ausführungsform des erfindungsgemäßen Brennstoffleitungssystems 1, welches einen Flussteiler 10 aufweist, der über einen Motor 11 entsprechend betrieben werden kann. Das Brennstoffleitungssystems 1 weist weiterhin eine Heizöl zuführende Heizölleitung auf, über welche der Flussteiler 10 mit einer Menge an Heizöl versorgt werden kann. Der Flussteiler seinerseits ist wiederum dazu ausgebildet, diesen Heizölstrom auf einzelne, nachfolgend abgeführte Heizölströme aufzuteilen. Diese werden über eine geeignete abführende Heizölleitung 16 befördert. Vorliegend ist die abführende Heizölleitung 16 als Einzelleitung dargestellt, jedoch der Fachmann erkennt, dass die abführende Heizölleitung 16 durch eine beliebige Anzahl an Heizölleitungen 16 ersetzt sein kann. Insofern steht die Einzelleitung nur vertretend für eine beliebige Anzahl an abführenden Heizölleitungen 16.

Die zuführende Heizölleitung 15 weist ein erstes Absperrorgan 18 auf, mittels welchem der zugeführte Heizölfluss unterbrochen werden kann. Dieses kann auch ein Regelventil zur gezielten Einstellung der Menge an Heizöl sein, die an die Brenner der Gasturbine geliefert wird. Ebenso kann mittels eines zweiten Absperrorgans 19, welches in die abführende Heizölleitung 16 verschaltet ist, ebenfalls der Heizölfluss unterbrochen werden. Bevorzugt ist dieses Absperrorgan 19 kein Regelventil, sondern lediglich ein Abschaltventil.

Weiterhin weist das Brennstoffleitungssystem 1 eine Bypass-Leitung 20 auf, welche in die zuführende Heizölleitung 15 stromab (in Bezug auf den regulären Betrieb des Brennstoffleitungssystems 1) des ersten Absperrorgans 18 mündet. Alternativ kann die Bypass-Leitung 20 auch direkt mit dem Flussteiler 10 verschaltet sein, wohingegen die Funktionalität und die Reihenfolge der strömungstechnischen Merkmale dadurch nicht geändert werden. Weiterhin ist die Bypass-Leitung 20 stromauf (in Bezug auf den regulären Betrieb des Brennstoffleitungssystems 1) zu dem zweiten Absperrorgan 19 in die abführende Heizölleitung 16 verschaltet. Fernerhin weist die Bypass-Leitung 20 ein Bypass-Ventil 21 auf, welches den Fluss in der Bypass-Leitung 20 unterbrechen bzw. auch herstellen kann.

Werden nun die beiden Absperrorgane 18 und 19 geschlossen sowie das Bypass-Ventil 21 geöffnet, wird ein Strömungskreislauf zwischen dem Flussteiler 10 und der Bypass-Leitung 20 gebildet, über welchen das in den betreffenden Leitungsabschnitten befindliche Heizöl durch motorischen Betrieb des Flussteilers 10 bewegt werden kann. Die mechanische Bewegung sorgt dafür, dass Ablagerungen bzw. Bestandteile, die für die Zusetzung in den Flussteiler 10 verantwortlich sein können, aufgeschwemmt werden. Wird der Flussteiler also über einen vorbestimmten Zeitraum, also etwa 10 Minuten und mehr, betrieben, werden insbesondere all diejenigen Bestandteile in dem Flussteiler 10 bewegt, die andererseits über längere Zeitdauer ein Zusetzen der beweglichen Bestandteile des Flussteilers 10 verursachen könnten.

Figur 2 zeigt eine weitere Ausführungsform des erfindungsgemäßen Brennstoffleitungssystems 1, welches sich von dem in Figur 1 gezeigten Brennstoffleitungssystems 1 dahingehend unterscheidet, dass die Anzahl an abführenden Heizölleitungen 16 genau auf drei festgelegt ist. Während die Ausführungsform in Figur 1 also für eine beliebige Anzahl an abführenden Heizölleitungen 16 steht, wurde in der Ausführungsform nach Figur 2 eine Konkretisierung getroffen. Hierbei weist jede abführende Heizölleitung 16 ein eigenes zweites Absperrorgan 19 auf, über welches die jeweiligen Heizölleitungen 16 abgesperrt werden können. Die Bypass-Leitung 20 wiederum ist jeweils mit allen abführenden Heizölleitungen 16 verschaltet, so dass die Gesamtmenge an Heizöl aus all den Abschnitten der abführenden Heizölleitungen 16 zum Spülen herangezogen werden kann.

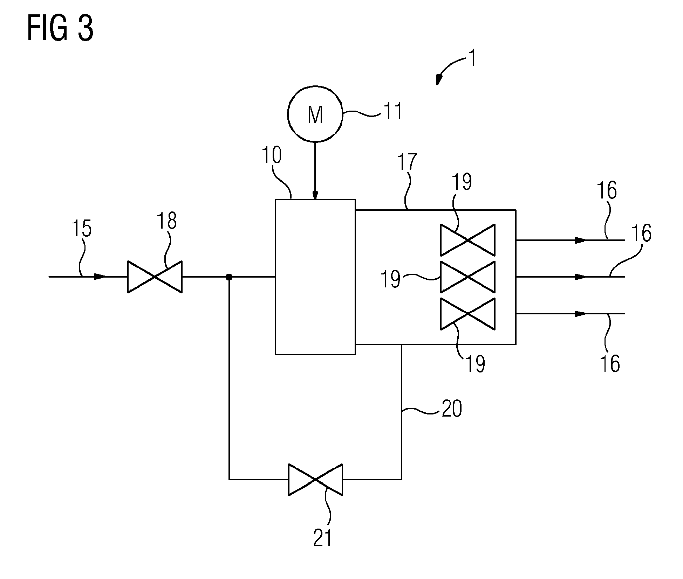

Figur 3 zeigt eine weitere Ausführungsform der Erfindung, welche sich von den vorhergehenden Ausführungsformen dahingehend unterscheidet, dass die abführenden Heizölleitungen 16 nicht einzelne zweite Absperrorgane 19 aufweisen, sondern diese in einem Multifunktionsventil 17 integriert sind. Das Multifunktionsventil seinerseits kann etwa mit dem Flussteiler 10 direkt verschaltet sein, wobei die Anschlüsse für die Bypass-Leitung 20 bzw. die abführenden Heizölleitungen 17 entsprechend in dem Multifunktionsventil 17 vorgesehen sein können. Eine Änderung der Funktionalität beim Spülen des Flussteilers 10 über die Bypass-Leitung 20 ergibt sich durch die Verwendung des Multifunktionsventils 17 nicht.

Weitere Ausführungsformen ergeben sich aus den Unteransprüchen.

## Patentansprüche

1. Brennstoffleitungssystem (1) einer Gasturbine (100) umfassend einen motorisch betreibbaren Flussteiler (10), in welchen fluidtechnisch eine zuführende Heizölleitung (15) mündet, und welcher fluidtechnisch an eine Anzahl an abführenden Heizölleitungen (16) angeschlossen ist,
**dadurch gekennzeichnet, dass**
eine Bypass-Leitung (20) vorgesehen ist, welche die zuführende Heizölleitung (15) und wenigstens eine abführende Heizölleitung (16) fluidtechnisch verbindet, wobei in die Bypass-Leitung (20) ein Bypass-Ventil (21) zum Absperren und Öffnen der Bypass-Leitung (20) geschaltet ist.

2. Brennstoffleitungssystem gemäß Anspruch 1,
**dadurch gekennzeichnet, dass**
die Bypass-Leitung (20) mit allen abführenden Heizölleitungen (16) fluidtechnisch verbunden ist.

3. Brennstoffleitungssystem gemäß einem der vorhergehenden Ansprüche,
**dadurch gekennzeichnet, dass**
wenigstens einige, bevorzugt alle abführenden Heizölleitungen (16) mit einem Multifunktionsventil (17) verschaltet sind, und die Bypass-Leitung (20) über das Multifunktionsventil (17) mit der abführenden Heizölleitung (16) fluidtechnisch verschaltet ist.

4. Brennstoffleitungssystem gemäß einem der vorhergehenden Ansprüche,
**dadurch gekennzeichnet, dass**
die zuführende Heizölleitung (15) ein erstes Absperrorgan (18) aufweist, welches bei regulärem Betrieb des Brennstoffleitungssystems (1) stromauf der fluidtechnischen Verbindung von zuführender Heizölleitung (15) und Bypass-Leitung (20) angeordnet ist, und wenigstens eine abführende Heizölleitung (16) ein zweites Absperrorgan (19) aufweist, welches bei regulärem Betrieb des Brennstoffleitungssystems (1) stromabwärts der fluidtechnischen Verbindung von abführender Heizölleitung (16) und Bypass-Leitung (20) angeordnet ist.

5. Verfahren zum Betrieb eines Brennstoffleitungssystems () gemäß einem der vorhergehenden Ansprüche,
**dadurch gekennzeichnet, dass**
die folgenden Schritte umfasst sind:
- Absperren der zuführenden Heizölleitung (15) durch ein erstes Absperrorgan (18);
- Absperren wenigstens einer abführenden Heizölleitung (16) durch ein zweites Absperrorgan (19);
- Öffnen des Bypass-Ventils (21) in der Bypass-Leitung (20) ;
- Motorisches Betreiben des Flussteilers (10) und zyklisches Bewegen von Heizöl in dem Flussteiler (10) und der Bypass-Leitung (20).

6. Verfahren zum Betrieb eines Brennstoffleitungssystems () gemäß Anspruch 5,
**dadurch gekennzeichnet, dass**
das motorische Betreiben des Flussteilers (20) für eine vorbestimmte Zeit, insbesondere für wenigstens 10 Min ohne Unterbrechung durchgeführt wird.

7. Gasturbine (100) umfassend ein Brennstoffleitungssystem (1) nach einem der vorhergehenden Ansprüche 1 bis 4.
